# EUROPÄISCHE PATENTSCHRIFT

(11) **EP 0 475 227 B1**
(45) Veröffentlichungstag und Bekanntmachung des Hinweises auf die Patenterteilung: **15.02.1995**
(21) Anmeldenummer: 91114702.3
(22) Anmeldetag: 31.08.1991
(51) Int. Cl.: B09B 3/00

(54) **Verfahren und Vorrichtung für die mikrobielle in situ-Entsorgung von kontaminiertem Erdreich**
Method and apparatus for the in-situ microbial treatment of contaminated soil
Procédé et dispositif pour le traitement microbien in-situ de terre contaminée

(30) Priorität: 05.09.1990 DE 4028055
(43) Veröffentlichungstag der Anmeldung: 18.03.1992
(73) Patentinhaber: Lobbe Xenex GmbH, D-58642 Iserlohn (DE)
(72) Erfinder: Bisa, Karl, Dr. med, W-5948 Schmallenberg-Grafschaft (DE)
(74) Vertreter: Fuchs Mehler Weiss

(56) Entgegenhaltungen:
- EP-A- 0 228 626
- EP-A- 0 288 805
- DE-A- 2 802 012
- DE-A- 3 540 427
- DE-A- 3 720 833
- DE-A- 3 812 364
- DE-A- 3 818 398
- FR-A- 1 469 311

## Beschreibung

Die vorliegende Erfindung befaßt sich mit einem Verfahren und einer Vorrichtung zur mikrobiellen in situ-Entsorgung von mit Xenobiotika kontaminiertem Erdreich.

Die Entsorgung erfolgt dabei über die Biodegradation der Xenobiotika. Ein solcher biologischer Abbau von mit Umweltchemikalien belastetem Erdreich findet unter Einsatz von adaptierten Mikroorganismen statt, die entweder aus dem Habitat selektiert wurden, oder Konsortien ausgesuchter Spezies enthalten, mit enzymatisch aufeinander abgestimmten metabolischen Eigenschaften. Der Biodegradations-Vorgang, die Abbaugeschwindigkeit und Abbaustufe sind aber nicht allein von den metabolischen Fähigkeiten der Mikroorganismen abhängig, sondern auch von den physiko-chemischen Prozessvorgängen, wobei die Reaktionskinetik und die metabolische Aktivität der Mikroorganismen gesteuert wird.

Das mit Umweltchemikalien belastete Erdreich kann als Reaktor betrachtet werden, in dem die mikrobiellen Reaktionsschritte unter optimalen Verhältnissen ablaufen müssen. Bereits unter ungestörten, natürlichen Bedingungen findet eine, wenn auch verlangsamte, Biodegradation statt.

In den meisten Fällen reichen die natürlich vorhandenen Mikroorganismen sowohl hinsichtlich ihrer Menge als auch ihres Abbauvermögens selbst unter optimalen Umgebungsbedingungen nicht aus, die Biodegradation in absehbaren Zeiträumen zu bewältigen. Durch gezielte Zuchtwahl und Auslese können jedoch adaptierte Bakterienstämme mit speziellen Eigenschaften gewonnen werden, die auf mit unterschiedlichen Schadstoffen versetzten Nährböden gezüchtet und adaptiert werden.

Unter wesentlicher Abkürzung natürlicher Abbauprozesse können dann solche speziell adaptierten Mikroorganismen bei der Biodegradation der Xenobiotika eingesetzt werden. Eine Möglichkeit besteht darin, den schadstoffbelasteten Boden auszubaggern und dann in einem abgedichteten Becken einer mikrobiologischen Behandlung mit adaptierten Spezies zu unterziehen, unter Zusatz von Nährstoffen und ggf. oberflächenaktiven Substanzen, die den Angriff der Mikroorganismen erleichtern sollen.

So wird in der DE-OS 37 20 833 ein Verfahren beschrieben, in dem das ausgebaggerte, kontaminierte Erdreich mit Flüssigkeit durchsetzt wird und dann adaptierte Mikroorganismen inokuliert werden, wobei geeignete Temperaturverhältnisse und ausreichende Luftzufuhr sichergestellt wurden.

In der DE-OS 38 18 398 wird das ausgebaggerte, kontaminierte Erdreich in zwei kombinierten Behandlungsstufen zunächst einer aeroben Behandlung mit aerob-adaptierten Mikroorganismen und dann einer anaeroben Behandlung mit entsprechend anaerob-adaptierten Mikroorganismen unterzogen. Ggf. können die Behandlungsstufen auch in umgekehrter Reihenfolge ablaufen.

Das ausgebaggerte Erdreich kann im on site-Verfahren und im off site-Verfahren dekontaminiert werden. Beide Verfahren sind aber sehr arbeits- und platzaufwendig und damit umständlich.

Wesentlich einfacher ist das Verfahren gemäß der DE-PS 28 02 012, worin die Mikroorganismen mit geeigneten Nährmitteln zusammen in einem biotensiden Schaum aufgeschäumt und so in situ auf das dekontaminierte Erdreich aufgebracht werden. Dieses Verfahren hat aber den entscheidenden Nachteil, daß dabei nur die obersten Bodenschichten erreicht werden können.

Durch die in der Landwirtschaft Verwendung findenden Bearbeitungsmethoden wird die Textur des Bodens weitestgehend unkontrolliert zerstört. Die den Bodenkapillaren zukommende Kanalisierung der Bodentextur sowie die Porosität des Erdreichs gehen verloren, so daß die Mikroorganismen nur die Nährstoffe in ihrer unmittelbaren Umgebung nutzen können und weiter entfernte Nährstoffe nicht mehr zugänglich sind. Damit verbunden ist eine mangelhafte Benetzung und Befeuchtung sowie eine verminderte Sorption der Nährstoffe. Ein Auftragen von adaptierten Mikroorganismen in Suspension oder Schäumen nur auf die Oberfläche des kontaminierten Erdreichs muß also auf die allerobersten Erdschichten beschränkt bleiben.

So wird in der EP-A-0 288 805 ein verfahren beschrieben, wobei verunreinigte Böden bis zu ca. 40 cm Tiefe durch Aufsprühen von an den jeweiligen Schadstoff angepaßter Biomasse auf die Bodenoberfläche, ggfs. unter gleichzeitiger Schaumbildung, dekontaminiert werden. Bei größeren Tiefen bis zu ca. 1 m muß der verseuchte Boden durch Umbrechen oder Einfräsen entsprechend tiefer Furchen bis zur Homogenisierung der ursprünglich unterschiedlichen Schadstoffkonzentration aufbereitet werden, bevor die Mikroorganismen oder die Biomasse durch Verrieseln aufgebracht werden. Bei derartiger Aufbereitung geht aber die natürlich gewachsene Bodentextur vollständig verloren.

Der vorliegenden Erfindung liegt daher die Aufgabe zugrunde, ein Verfahren und eine Vorrichtung zur Verfügung zu stellen, mit denen kontaminiertes Erdreich in situ mit vergleichsweise geringem Aufwand tiefgreifend (bis zu einer Tiefe von 1 m)dekontaminiert werden kann, wobei die natürlich gewachsene Bodentextur weitgehend erhalten bleibt und die großtechnischen Erfordernisse für eine dynamische Biodegradation der kontaminierten Böden in weitem Bereich berücksichtigt werden.

Die Lösung der Aufgabe erfolgt verfahrensmäßig durch die kennzeichnenden Merkmale des Anspruchs 1 und in Bezug auf die Vorrichtung nach den kennzeichnenden Merkmalen des Anspruchs 15.

Die an einem biologischen Abbau beteiligten Mikroorganismen benötigen eine ausreichende Versorgung mit spezifischen Nährstoffen, wie Phosphor, Stickstoff, Vitamine und Spurenelemente. Von besonderer Wichtigkeit ist jedoch ein ausreichendes Energie-Angebot, wobei aerobe Mikroorganismen den molekularen Sauerstoff als Elektronenakzeptor für ihren Stoffwechsel benötigen. Während solche Organismen auf den Sauerstoff für ihre Lebensfähigkeit angewiesen sind, nehmen Anaerobier andere Energiequellen in Anspruch. Zwar sind die meisten Xenobiotika einem vollständigen Abbau nur von aeroben Mikroorganismen zugänglich, aber anaerobe Mikroorganismen könnten dabei durchaus gewisse Teilfunktionen eines biologischen Abbaues übernehmen, wobei der anaerobe Teilabbau als Vor- oder Nachbehandlungsstufe durchgeführt werden kann.

Nun ist aber bekannt, daß der Sauerstoff-Partial-Druck im Boden mit zunehmender Tiefe relativ stark abnimmt. So herrschen bis zu einer Bodentiefe von ca. 30 cm aerobe Bedingungen, während ab einer Tiefe von 50 cm anaerobe Bedingungen anzutreffen sind. Die dazwischenliegende Bodenschicht zwischen 30 und 50 cm kann als Übergangszone von aerob nach anaerob angesehen werden. In einer definierten Bodentiefe wären also vorzugsweise solche Mikroorganismen einzusetzen, deren Erfordernisse optimal an das dort herrschende Energieangebot, den pH-Wert, die Temperatur, die Feuchtigkeit und nicht zuletzt das Nährstoffangebot, insbesondere in Form des zu entsorgenden Xenobiotikums adaptiert sind.

Zur Inokulation des biologischen Materials in die biologischen Bodenschichten wird erfindungsgemäß das kontaminierte Erdreich mit einer an ihrer Rückseite mit Düsen in diskreten Abständen versehenen Schar eingeschnitten, wobei die Eindringtiefe vorgewählt werden kann. Diese kann bis zu 1 m betragen.

Durch eine leichte Horizontalbewegung der in das Erdreich eingedrungenen und vorzugsweise an einem Meliorationsgerät befestigten Schar wird zwischen deren Rückseite und dem Erdreich ein keilförmiger Spalt geöffnet, in welchem vorzugsweise ein Aerosolstrom von Mikroorganismen in einer Nährlösung und einem schaumartigen Biotensid eingetragen wird. Gemäß den beabstandeten Düsen wird das biologische Material dadurch in unterschiedliche Bodentiefen freigesetzt.

Den Düsen im Bereich der aeroben Bodenzone (bis ca. 30 cm Tiefe) werden dabei Vorratsbehälter mit solchen Mikroorganismen zugeordnet, die optimal an aerobe Umweltbedingungen adaptiert sind. Im Bereich der anaeroben Bodenzonen (unterhalb 50 cm Bodentiefe) werden den entsprechenden Düsen jeweils Vorratsbehältnisse mit anaeroben Mikroorganismen zugeordnet, während in der Übergangszone (30 bis 50 cm Bodentiefe) vorzugweise fakultative Anaerobier zum Einsatz kommen.

Nach der Inokulation des Erdreichs wird die Schar herausgezogen und parallel zu dem inokulierten Erdeinstich, vorzugsweise in einer Entfernung von 5 bis 10 cm ein weiterer Erdschnitt eingebracht. Durch eine erneute leichte Horizontalverschiebung der Schar in Richtung auf den zuvor erzeugten Erdspalt, wird dieser wieder geschlossen, wobei in den tieferen Erdschichten (unterhalb 50 cm) durch das Herauspressen der Luft wieder anaerobe Bedingungen hergestellt werden. Durch erneutes Einbringen des spezifisch auf die Bodentiefe abgestimmten Inokulats und anschließende Wiederholung der vorher beschriebenen Arbeitsgänge kann somit eine ganze Fläche kontaminiertes Erdreich in situ sequentiell bis zu einer Bodentiefe von 1 m optimal mit die Xenobiotika abbauenden Mikroorganismen inokuliert werden. Durch das schichtweise Belüften und das Aufschließen mit keilförmigen Spalten bleibt die natürlich gewachsene Bodentextur im Großen und Ganzen erhalten.

Mit dem Eindringen der Arbeitsschar können gleichzeitig flüssige, pulverförmige und/oder pastöse Stoffe in das Erdreich eingebracht werden. Diese Stoffe können auch in versprühter oder Aerosol-Form im Erdreich fein verteilt werden. Werden die Mikroorganismen mit einem Schaum aus einem Biotensid in das Erdreich eingetragen, dann sammeln sie sich in den interstitiellen Zwischenräumen der Schaummizellen und werden beim Aufplatzen des Schaums äußerst fein verteilt in das Erdreich verteilt, wobei die Biotenside die Sorptionseigenschaften des Bodens positiv beeinflussen und somit auch den Transport der abbauenden Mikroorganismen zu den Wirkungsorten erleichtern. Gleichzeitig kann über die Schaummizellen Sauerstoff als Energie-Donator in die aerobe Bodenzone befördert werden und für die Aktivität der dort inokulierten Aerobenspezies zusätzlich verfügbar gemacht werden.

Die für die Mikroorganismen erforderlichen Nahrlösungen und das biologisch abbaubare Tensid können auch in feiner, aerosolartiger Verteilung dem Erdreich zugeführt werden und somit für optimales Mikroorganismuswachstum obligatorische Bodenparameter, wie z.B. die Feldkapazität, Porosität, Sorption günstiger beeinflussen. Desweiteren kann eine Homogenisierung heterogener Bodenbestandteile oder auch sorbierter chemischer Substanzen erreicht werden.

In einer besonders bevorzugten Ausführungsform des Verfahrens kann gleichzeitig mit dem in die Tiefe eingebrachten Inokulat auch die Oberfläche des kontaminierten Erdreichs mit einer Gesamtdecke von in Schaum eingebetteten Mikroorganismen aufgetragen werden. Die Mikroorganismen werden dann bei der Auflösung des Schaumes allmählich aus den interstitiellen Zwischenräumen der Schaummizellen an das Erdreich abgegeben.

Für eine Inokulation eines kontaminierten Bodens werden solche Mikroorganismen-Spezies verwendet, die so adaptiert sind, daß das kontaminierte Agens optimal metabolisiert werden kann. Einer der am häufigsten vorkommenden Schadstoffe ist Mineralöl. Für dessen Abbau können z.B. folgende Mikroorganismen in Betracht kommen:
Candida parapsilosis
Candida tropicalis
Candida utilis
Aureobasidium pullulans
Myrothecium verrucaria
Cladosporium cladosporiodes
Saccharomyces cerevisiae
Aspergillus sp.
Rhodotorula sp.
Candida lipolytica
Micrococcus colpogenes
Nocardia corallina
Nocardia globerula N.39
Nocardia globerula N.45
Nocardia opaca
Nocardia rubra
Nocardia paraffinae

Als Nährbodenmaterialien kommen dazu folgende Zusammensetzungen zum Einsatz:

| Nährboden 1: | |
|---|---|
| Handelsübliches Nährbodenmaterial angepaßt auf die jeweilige Bakterienart ("Difco") | 23,0 g |
| Hefeextrakt | 3,0 g |
| Ethylenglycol | 5,0 ml |
| Glucose | 5,0 g |
| Agar-agar | 15,0 g |
| destilliertes Wasser | 1.000 ml |

| Nährboden 2: | |
|---|---|
| Proteine aus Baumwollfasern | 5,0 g |
| NH₄NO₃ | 2,5 g |
| (NH₄)₂HPO₄ | 2,5 g |
| MgSO₄ | 0,2 g |
| K₂HPO₄ | 1,0 g |
| Rohpetroleum | 5,0 ml |
| Meeressalz | 35,0 g |
| Leitungswasser | 1.000 ml |

Auch andere Nährböden auf Thioglycol-Basis können dafür verwendet werden.

Anstelle der genannten Bakterien können auch Pilze zur Anwendung kommen, z.B.
Aureobasidium pullulans
Myrothecium verrucarin
Cladosporium cladosporioides
Aspergillus sp.K.
In diesem Falle dient besonders mit Glucose angereichertes Agar-agar als Nährboden. Desgleichen können auch noch mineralölabbauende Hefen mit geeigneten Nährbodenmaterialien in den Schaum eingefügt werden, wie sie z.B. oben bereits angeführt sind. Auch für solche Hefen eignen sich insbesondere Nährböden auf Thioglycol-Basis.

Das gleichzeitige Inokulieren dekontaminierten Erdreichs in einem Arbeitsgang ermöglicht es, ohne nennenswerte Störung der natürlichen Bodenmatrix über das Eintragen anaerober Mikroorganismen-Spezies auch noch solche Xenobiotika für einen anschließenden aeroben Aufschluß vorzubereiten, der nach dem bisherigen Stand der Technik nur über on site- oder off site-Verfahren einer biologischen Entsorgung unterzogen werden konnten. Mit der erfindungsgemäßen zweigleisigen mikrobiellen Dekontamination können nämlich über anaerobe Mikroorganismen schwer abbaubare Schadstoffe, wie z.B. polyzyklische Kohlenwasserstoffe und chlorierte Kohlenwasserstoffe durch Dehalogenierung für einen oxydativ gesteuerten Abbau vorbereitet und ihr weiterer Abbau dann in einer nachgeschalteten aeroben Stufe zu Ende geführt werden.

Für den Abbau von aromatischen Bestandteilen von Kohlenwasserstoffen sind insbesondere obligat anaerobe Stämme, z.B. Bacteroides, Clostridien, Bifido-Bakterien und auch fakultativ anaerobe Enterobakterien und Streptokokken in Betracht zu ziehen.

Neben der hydrolytischen Spaltung von Biopolymeren kann durch die Fähigkeit von azetogenen und methanogenen Aerobiern ein weiterer Abbau von Fettsäuren und Aromaten induziert werden. Solche Mikroorganismen können leicht in großen Mengen als aktive Bestandteile des Faulschlamms aus Bioreaktoren, in denen eine anaerobe Schlammfaulung durchgeführt wurde, oder aus der Biomasse einer anaeroben Abwasserreinigungsstufe als aktives Gemisch erhalten werden. Für einen Einsatz als Dekontaminierungsstoffe ist es allerdings vorteilhaft, zunächst die natürlich anfallenden Gemische unter geeigneten Kulturbedingungen mit steigenden Mengen des kontaminierenden Mittels zu selektieren, um so eine optimal angepasste Biomasse zu entwickeln.

Folgende Nährböden und Kulturbedingungen sind dafür geeignet:
Candida parapsilosis
Candida tropicalis
Candida utilis
Aureobasidium pullulans
Myrothecium verrucaria
Cladosporium cladosporiodes
Saccharomyces cerevisiae
Aspergillus sp.
Rhodotorula sp.
Candida lipolytica
Micrococcus colpogenes
Nocardia corallina
Nocardia globerula N.39
Nocardia globerula N.45
Nocardia opaca
Nocardia rubra
Nocardia paraffinae

| Nährboden 1: | |
|---|---|
| Handelsübliches Nährbodenmaterial, angepaßt auf die jeweilige Bakterienart ("Difco") | 23,0 g |
| Hefeextrakt | 3,0 g |
| Ethylenglycol | 5,0 ml |
| Glucose | 5,0 g |
| Agar-agar | 15,0 g |
| destilliertes Wasser | 1.000 ml |

| Nährboden II: | |
|---|---|
| Proteine aus Baumwollfasern | 5,0 g |
| NH₄NO₃ | 2,5 g |
| (NH₄)₂HPO₄ | 2,5 g |
| MgSO₄ | 0,2 g |
| K₂HPO₄ | 1,0 g |
| Rohpetroleum | 5,0 ml |
| Meeressalz | 35,0 g |
| Leitungswasser | 1.000 ml |

Die Angaben beziehen sich auf 1 ltr H₂O.

Die Inokulation von dafür geeigneten anaeroben Mikroorganismen erfolgt, wie bereits ausgeführt, am unteren Scharende des Bearbeitungsgeräts in die sauerstoffverarmten Zonen der unteren Erdtasche. Wenn im Falle eines vorbereitenden Abbaues nach geraumer Zeit der anaerobe Abbau zum Stehen gekommen ist, kann es notwendig werden, in einem gesonderten Arbeitsgang eine durchgreifende Zerteilung und Umschichtung des Erdreiches vorzunehmen, so daß die unteren Bodenschichten nach oben zu liegen kommen und so einem aeroben Abbau nach erneuter Inokulation mit Aerobiern zugänglichen werden. Die ursprüngliche Bodentextur wird dabei allerdings weitgehend zerstört. Zur Umschichtung des Erdreichs kann am Meliorationsgerät die Schar in horizontaler, vertikaler und/oder sagittaler Richtung verstellt werden.

Die für die den unterschiedlichen Bodenschichten zugeordneten Düsen jeweils vorgesehenen Vorratsbehältnisse sind über geeignete Förderungseinrichtungen mit diesen verbunden. Die anaeroben Mikroorganismus-Kulturen sind in einer Aufschwemmung von biotechnischem Material mit inerten Trägern luftdicht in einem Behältnis aus elastischem Material, vorzugsweise einem Kunststoff-Sack bevorratet. Der Inhalt wird über eine geeignete Kolbenpumpe dosiert, die taktmäßig durch eine Nockenwelle betätigt wird und entsprechende Mengen zu den Düsen fördert. In einer anderen Ausführungsform wird das anaerobe Material durch eine Schneckenpumpe über ein luftdicht abgeschlossenes Leitungssystem zu der Düse gefördert, wodurch eine biologische Schädigung infolge Zutritts von Luftsauerstoff verhindert werden kann.

Gegebenenfalls kann es erforderlich werden, z.B. bei der Entsorgung von auf Alt-Deponien gelagertem Erdreich, daß die Eindringtiefe der Schar eine definierte Bodentiefe nicht überschreiten darf, um z.B. unterhalb des zu entsorgenden Erdreichs angebrachte Dichtungsfolien nicht zu beschädigen oder gar zu zerstören. Für diesen Fall sind an geeigneter Stelle angebrachte physikalisch wirksame Sensoren vorgesehen, die über eine integrierte Regeleinrichtung die Arbeitstiefe des Bearbeitungsgerätes steuern. Die Sensoren können dabei die entsprechende Regelgröße mittels Ultraschall, Leitfähigkeitsmessung, Laserstrahlung u.a. erfassen.

Mit der erfindungsgemäßen Vorrichtung kann der jeweils gewünschte Zustand der Bodenmatrix, zur Veränderung physikalisch-chemischer und biologischer Verhältnisse mechanisch gesteuert werden. Das biotechnische Bearbeitungsgerät für die Dekontamination von Erdreich kann alle notwendigen Funktionen der Bodenbearbeitung, ebenso wie die biologische Inokulation selektiven Materials und die zusätzliche Applikation von Nährstoffen in einem Arbeitsgang zeitgerecht, in gewählter Dosierung, in vorbestimmter Bodentiefe und auch unter Berücksichtigung unterschiedlicher Lebensverhältnisse der Mikroorganismen ausführen.

Zur Verdeutlichung wird die Erfindung anhand zweier Zeichnungen näher erläutert. Es zeigen:
Fig. 1: Eine an einem Bodenmeliorationsgerät befestigte Schar mit Düsen für aerobe und anaerobe Bodenschichten.
Fig. 2: Eine in das Erdreich eingeführte Schar mit Düsen für aerobe, anaerobe Bodenschichten und für die dazwischen liegende Übergangszone.

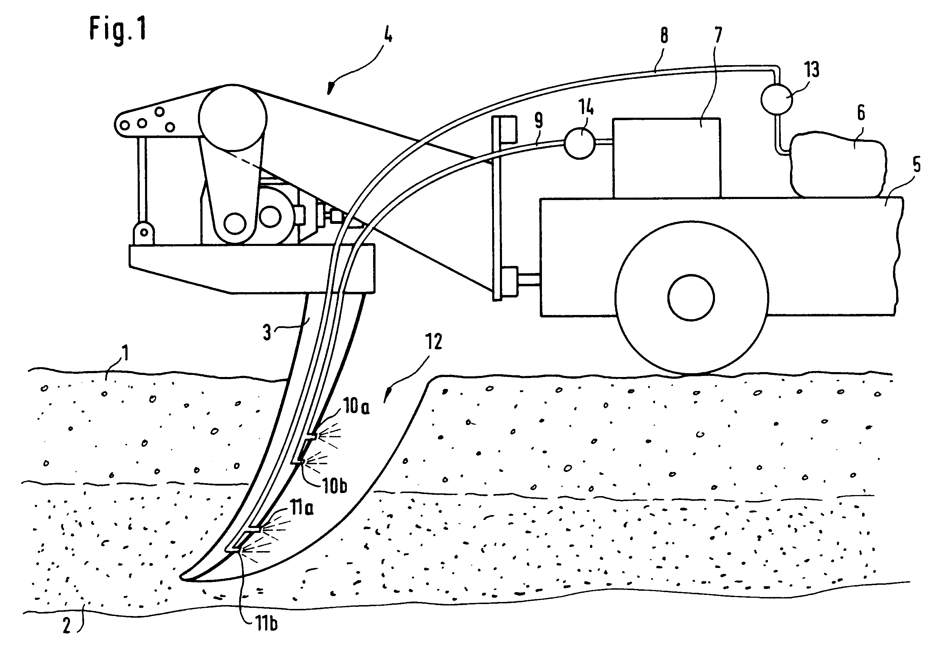

In Fig. 1 ist die an den Bewegungsmechanismus 4 des Meliorationsgeräts 5 angebrachte Schar 3 in den der aeroben Bodenschicht 1 korrelierten Abstandsbereich mit Düsen 10a, b bestückt, die über eine Zuführungsleitung 9 an einen mit aeroben Mikroorganismen bevorrateten Behälter 7 angeschlossen sind. Die Pumpe 14 sorgt für die geeignete Dosierung. Das in die anaerobe Bodenschicht 2 reichende Teil der Schar 3 ist wiederum mit Düsen 11a, b versehen, die über eine luftdicht abgeschlossene Versorgungsleitung 8 an einen Plastiksack 6 angeschlossen ist, der anaerobe Mikroorganismen-Spezies bevorratet. Eine Pumpe 13 sorgt für die geeignete Dosierung.

Über den Bewegungsmechanismus 4 des Bodenmeliorationsgeräts wird mittels einer leichten Horizontalbewegung die in das Erdreich eingedrungene Schar 3 nach vorn bewegt, so daß an der mit den Düsen versehenen Rückseite der Schar 3 ein Spalt 12 entsteht, in den die Mikroorganismen versprüht werden.

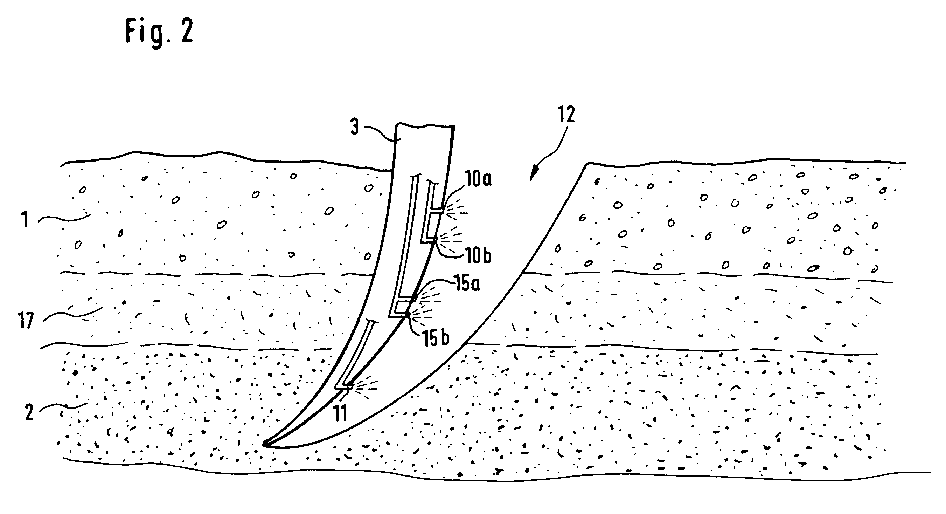

In Fig. 2 sind die den drei Bodentiefenzonen zugeordneten Düsen wiedergegeben. Der aeroben Bodenschicht sind die Düsen 10a, b, die aerobe Mikroorganismen versprühen, zugeordnet, der anaeroben Zone 2 die Düse 11. Die der dazwischen liegenden Übergangszone 17 zugeordneten Düsen 15a, b sind an einen (nicht eingezeichneten) Vorratsbehälter mit fakultativ anaeroben Mikroorganismen angeschlossen.

## Patentansprüche

1. Verfahren zur in situ-Entsorgung von mit Xenobiotika bis zu einer Bodentiefe von 1 m kontaminiertem Erdreich unter Verwendung von an die Xenobiotika adaptierten Mikroorganismen, dadurch gekennzeichnet, daß das kontaminierte Erdreich in unterschiedlichen, definierten Bodentiefen in Abhängigkeit von den dort herrschenden mikrobiellen Lebensverhältnissen jeweils mit aeroben und/oder anaeroben Mikroorganismen-Spezies inokuliert wird.

2. Verfahren nach Anspruch 1, dadurch gekennzeichnet, daß das Inokulat mittels an der Rückseite von Scharen eines Bodenmeliorationsgeräts in verschiedenen diskreten Höhen angebrachter, an einen Vorratsbehälter über Zuführungsleitungen angeschlossener Düsen in den von der Schar aufgeschlossenen Boden eingebracht wird.

3. Verfahren nach den Ansprüchen 1 und 2, dadurch gekennzeichnet, daß in die oberen Bodenschichten bis zu 30 cm Tiefe gezielt aerobe Mikroorganismenstämme eingetragen werden und/oder in die unteren Bodenschichten unter 50 cm gezielt anaerobe Mikroorganismenstämme eingetragen werden und/oder in die Bodentiefe zwischen 30 und 50 cm gezielt fakultativ anaerobe Mikroorganismen-Stämme eingetragen werden.

4. Verfahren nach den Ansprüchen 1 - 3, dadurch gekennzeichnet, daß der Boden in einem Arbeitsgang gleichzeitig sowohl mit aeroben als auch anaeroben Mikroorganismen inokuliert wird.

5. Verfahren nach den Ansprüchen 1 - 4, dadurch gekennzeichnet, daß das Inokulat in flüssiger Form eingebracht und gegebenenfalls im Erdreich versprüht und/oder als Aerosol in das Erdreich eingebracht wird.

6. Verfahren nach den Ansprüchen 1 - 5, dadurch gekennzeichnet, daß die mikrobiellen Populationen zusammen mit biologisch abbaubaren Tensiden in das Erdreich eingebracht werden.

7. Verfahren nach den Ansprüchen 1 - 6, dadurch gekennzeichnet, daß die Mikroorganismenpopulationen zum gleichzeitigen Einbringen genügender Sauerstoffkonzentrationen in biotenside Schäume eingebettet in das Erdreich verbracht werden.

8. Verfahren nach den Ansprüchen 1 - 7, dadurch gekennzeichnet, daß dem die Mikroorganismen-Spezies enthaltenden Inokulat zusätzlich Hilfssubstanzen und Nährstoffe für den Metabolismus der Mikroorganismen zugesetzt wird.

9. Verfahren nach den Ansprüchen 1 - 6, dadurch gekennzeichnet, daß das Inokulat als suspendierte Biomasse und/oder in pulverförmigem Zustand und/oder als pastöse Masse eingetragen wird.

10. Verfahren nach den Ansprüchen 1 bis 9, dadurch gekennzeichnet, daß vor dem Inokulieren der Boden derart aufgeschlossen wird, daß die Bodentextur weitgehend erhalten bleibt.

11. Verfahren nach den Ansprüchen 1 bis 9, dadurch gekennzeichnet, daß vor dem Inokulieren der Boden derart aufgeschlossen wird, daß unter Verlust der ursprünglichen Bodentextur die ursprünglich unteren Anteile des Bodens an die Oberfläche des aufgeschlossenen Bodens zu liegen kommen.

12. Verfahren nach den Ansprüchen 1 bis 9, dadurch gekennzeichnet, daß zunächst in einer Vorbehandlungsstufe in die Bodenschichten unterhalb 50 cm anaerobe Mikroorganismen eingebracht werden und vor der Inokulation der Boden unter Verlust der Bodentextur so umgeschichtet wird, daß die ursprünglich unteren Anteile des Bodens an die Oberfläche des aufgeschlossenen Bodens zu liegen kommen.

13. Verfahren nach den Ansprüchen 1-12, dadurch gekennzeichnet, daß gleichzeitig mit dem Einbringen der Mikroorganismen in das Erdreich in biotenside Schäume eingebettete Mikroorganismen-Populationen auf die Oberfläche des Erdreiches aufgetragen werden.

14. Verfahren nach den Ansprüchen 1 bis 12, dadurch gekennzeichnet, daß nach der Inokulation des Bodens in die Erdschichten unterhalb 50 cm Tiefe in einer Nachbehandlung anaerobe Mikroorganismen eingetragen werden.

15. Vorrichtung zur Einführung von Mikroorganismen oder Biomasse in verseuchtes Erdreich in vorwählbarer Tiefe, dadurch gekennzeichnet, daß sie eine an ein Bodenmeliorationsgerät (5) anbringbare, in ihrer Eindringtiefe vorwählbare Schar (3) umfaßt, die an ihrer Rückseite über ein Leitungssystem (8, 9) an Vorratsbehältnisse angeschlossene Düsen (10, 11) aufweist, wobei die Düsen einzeln oder in Gruppen in diskreten Abständen von der Oberkante der Schar angeordnet sind, und im Hinblick auf unterschiedliche mikrobielle Sauerstoffverwertung unterschiedlichen Bodentiefenzonen zugeordnet werden können.

16. Vorrichtung nach Anspruch 15, dadurch gekennzeichnet, daß die über die Länge der Schar in diskreten Abständen angeordneten Düsen (10, 11) oder Gruppen von Düsen in drei Abstandszonen (1, 2, 17) unterteilt sind, die zu der aeroben (1), anaeroben (2) und der dazwischenliegenden Übergangs-Tiefenzone (17) des Erdreichs korelliert sind.

17. Vorrichtung nach den Ansprüchen 15 und 16, dadurch gekennzeichnet, daß die in den der Oberkante der Schar am nächsten liegenden Abstandsbereich angeordnete Düsen (10a, b) an Vorratsbehältnisse (7) mit aeroben Mikroorganismen-Spezies angeschlossen sind und die in dem der Oberkante der Schar am weitesten entfernten Abstandsbereich angeordneten Düsen (11) an Vorratsbehältnisse (6) mit anaeroben Mikroorganismen-Spezies angeschlossen sind, und die in dem mittleren Abstandsbereich der Schar angeorgneten Düsen (15) an Vorratsbehältnisse mit fakultativ aeroben Mikroorganismen-Spezies angeschlossen sind.

18. Vorrichtung nach den Ansprüchen 15 und 17, dadurch gekennzeichnet, daß die Vorratsbehältnisse für anaerobe Mikroorganismen (6) aus elastischem Material bestehen.

19. Vorrichtung nach Anspruch 18, dadurch gekennzeichnet, daß das anaerobe Material aus seinem Vorratsbehältnis mittels einer Kolbenpumpe (13) dosierbar ist und mittels einer Schneckenpumpe (13) förderbar ist.

20. Vorrichtung nach Anspruch 18, dadurch gekennzeichnet, daß das gesamte anaerobe Material innerhalb eines luftdicht abgeschlossenen Systems bevorratet ist.

21. Vorrichtung nach den Ansprüchen 15-20, dadurch gekennzeichnet, daß zur genauen Einhaltung einer jeweils zulässigen maximalen Eindringtiefe in eine Regeleinheit integrierbare, physikalisch wirksame Sensoren an der Schar und/oder am Meliorationsgerät angeordnet sind.

## Claims

1. A process for the in situ waist disposal of earth that is contaminated by xenobiotics as far as to a depth of 1 m, in utilizing microorganisms that are adapted to said xenobiotics, characterized in that said contaminated earth is inoculated with aerobic and/or anaerobic species of microorganisms, each depending on the present living conditions at different, defined depth.

2. A process according to claim 1, characterized in that the inoculum is introduced into the soil that is broken up by the share of an amelioration implement by means of nozzles which are connected with a tank by means of feed pipes and amounted to the backside of said shares at different discrete levels.

3. A process according to claims 1 and 2, characterized in that aerobic strains of microorganisms are methodically introduced into the upper layers of soil as far as to a depth of 30 cm and/or anaerobic strains of microorganisms are methodically introduced into the lower layers or the soil underneath 50 cm and/or facultative anaerobic strains of microorganisms are methodically introduced into the depth of soil situated between 30 and 50 cm.

4. A process according to claims 1 to 3, characterized in that the soil is inoculated in one working cycle concurrently with aerobic as well as with anaerobic microorganisms.

5. A process according to claims 1 to 4, characterized in that the inoculum is introduced in liquid state and possibly sprayed in the earth and/or introduced as an aerosol into the earth.

6. A process according to claims 1 to 5, characterized in that the microbial populations are introduced into the earth concurrently with biologically degradable tensides.

7. A process according to claims 1 to 6, characterized in that the populations of microorganisms are introduced into the earth when embedded in foams of bioactive tensides in order to concurrently introduce a sufficient concentration of oxygen.

8. A process according to claims 1 to 7, characterized in that further auxiliary substances and nutrients for the metabolism of the microorganisms are added to the inoculum containing the species of microorganisms.

9. A process according to claims 1 to 6, characterized in that the inoculum is introduced and the suspended biomass and/or in powdery state and/or as a puffy mass.

10. A process according to claims 1 to 9, characterized in that, before inoculation, the soil is broken up so as to safe the texture of the soil as far as possible.

11. A process according to claims 1 to 9, characterized in that, before the inoculation, at a loss of the original texture of the soil, the soil is broken up so as to bring the originally lower parts of the soil to the surface of the turned soil.

12. A process according to claims 1 to 9, characterized in that, in a pretreatment step, anaerobic microorganisms are first introduced into the layers of the soils underneath 50 cm and in that, before the inoculation, at a loss of the texture of the soil, the soil is turned over so as to bring the originally lower parts of the soil the surface of the turned soil.

13. A process according to claims 1 to 12, characterized in that, concurrently with the introduction of the microorganisms into the earth, populations of microorganisms are applied onto the surface of the earth that are embedded into foams of bioactive tensides.

14. A process according to claims 1 to 12, characterized in that, after the inoculation of the soil, anaerobic microorganisms are introduced in a post-treatment step into the layers of the soil at a depth underneath 50 cm.

15. A device for the introduction of microorganisms or biomass into contaminated earth at a predetermined depth, characterized in that it comprises a share (3) the penetration depth of which can be predetermined and which can be mounted at an amelioration implement (5), said share (3) having nozzles (10,11) at its backside that are connected with a storage tank via conduction lines (8,9), said nozzles being disposed alone or combined in groups at discrete distances from the upper edge of the share and being developed so as to be assigned to a different depth zones of the soil dependent from their different microbial oxygen consumption.

16. A device according to claim 15, characterized in that the nozzles (10,11) or groups of nozzles being disposed along the share at discrete distances are subdivided into three distance zones (1,2,17) being correlated to the aerobic (1), anaerobic (2) and the intervening transition depth zone (17) of the earth.

17. A device according to claims 15 and 16, characterized in that those nozzles (10a,b) being disposed at the distance zone next to the upper edge of the share are connected with storage tanks (7) containing aerobic species of microorganisms and those nozzles (11) having the greatest distance from the upper edge of the share are connected with storage tanks (6) containing anaerobic species of microorganisms and those nozzles (15) disposed in the middle distance zone of the share are connected with storage tanks containing facultative aerobic species of microorganisms.

18. A device according to claims 15 and 17, characterized in that the storage tanks for anaerobic microorganisms (6) consist of elastic material.

19. A device according to claim 18, characterized in that the dosage of the anaerobic material from its storage tank can be performed by means of a piston pump (13) and its convince can be performed by means of a spiral pump (13).

20. A device according to claim 18, characterized in that all the anaerobic material is stored within an air-sealed system.

21. A device according to claims 15 to 20, characterized in that, in order to exactly maintain a respective admissible maximum penetration depth, physically acting sensors are disposed at the share or at the amelioration implement which sensors can be integrated into a control unit.

## Revendications

1. Procédé de traitement in situ de terre contaminée de composés xénobiotiques, jusqu'à une profondeur de 1 m, par l'utilisation de micro-organismes adaptés aux composés xénobiotiques, caractérisé en ce que la terre contaminée est inoculée à des profondeurs définies, différentes, dépendant des conditions de vie microbienne qui y règnent, par des espèces de micro-organismes aérobies et/ou anaérobies.

2. Procédé suivant la revendication 1, caractérisé en ce que l'inoculat est introduit, par la partie arrière du soc d'un appareil d'amendement, à différentes hauteurs discrètes, par des tuyères raccordées par des conduites d'approvisionnement à un récipient de réserve, dans le sol creusé par le soc.

3. Procédé suivant les revendications 1 et 2, caractérisé en ce que, dans les couches supérieures de jusqu'à 30 cm de profondeur, des souches de micro-organismes aérobies sont introduites et/ou, dans les couches inférieures en dessous de 50 cm, sont introduites des souches de micro-organismes anaérobies et/ou dans les couches intermédiaires entre 30 et 50 cm, sont introduites des souches de micro-organismes facultativement anaérobies.

4. Procédé suivant les revendications 1 à 3, caractérisé en ce que le sol est inoculé avec des micro-organismes aérobies ainsi que anaérobies, dans un mode de travail simultané.

5. Procédé suivant les revendications 1 à 4, caractérisé en ce que l'inoculat est placé et facultativement injecté dans la terre sous forme liquide et/ou introduit dans la terre sous forme d'un aérosol.

6. Procédé suivant les revendications 1 à 5, caractérisé en ce que les populations microbiennes sont introduites dans la terre avec des tenseurs biologiquement décomposables.

7. Procédé suivant les revendications 1 à 6, caractérisé en ce que les populations de micro-organismes sont introduites dans la terre avec l'introduction simultanée de concentrations satisfaitantes en oxygène se trouvant dans la mousse de biotenseur.

8. Procédé suivant les revendications 1 à 7, caractérisé en ce que l'inoculat contenant les espèces de micro-organismes est préparé avec des substances auxiliaires et des substances alimentaires supplémentaires pour le métabolisme des micro-organismes.

9. Procédé suivant les revendications 1 à 6, caractérisé en ce que l'inoculat est introduit sous forme d'une biomasse en suspension et/ou dans un état pulvérulent et/ou sous forme d'une masse pâteuse.

10. Procédé suivant les revendications 1 à 9, caractérisé en ce que, avant l'inoculation, la terre est ouverte, de sorte que la texture du sol soit largement conservée.

11. Procédé suivant les revendications 1 à 9, caractérisé en ce que, avant l'inoculation, la terre est ouverte, de sorte que, par perte de la texture initiale, la partie initialement inférieure de la terre vienne à la surface de la terre à ouvrir.

12. Procédé suivant les revendications 1 à 9, caractérisé en ce que, dans une étape de prétraitement, des micro-organismes anaérobies sont d'abord introduits dans les couches de terre en dessous de 50 cm et, avant l'inoculation, la terre est réduite en couches par perte de la texture, de sorte que la partie initialement inférieure de la terre vienne à la surface de la terre à ouvrir.

13. Procédé suivant les revendications 1 à 12, caractérisé en ce que, simultanément à l'introduction des micro-organismes dans la terre, des populations de micro-organismes enrobées d'une mousse de biotenseur, soient déposées sur la surface de la terre.

14. Procédé suivant les revendications 1 à 12, caractérisé en ce que, après inoculation de la terre, les micro-organismes anaérobies soient introduits dans les couches inférieures à 50 cm de profondeur, dans un traitement ultérieur.

15. Dispositif de dépôt de micro-organismes ou d'une biomasse dans de la terre contaminée, à profondeur prédéterminée, caractérisé en ce qu'il consiste en un soc (3) pouvant être placé sur un appareil d'amendement (5), dont on peut déterminer la profondeur de pénétration, qui présente, à sa partie arrière, des tuyères (10, 11) raccordées à des récipients de réserve par un système de conduites (8, 9), où les tuyères sont uniques ou sont placées par groupes à intervalles discrets sur la surface du soc et sont coordonnées à différentes zones de profondeur dépendant de l'utilisation en oxygène différente des microbes.

16. Dispositif suivant la revendication 15, caractérisé en ce que, le long du soc, les tuyères ou groupes de tuyères (10, 11) placés à intervalles discrets sont séparés en trois zones distantes (1, 2, 17), qui sont corrélées aux zones aérobies (1,) anaérobies (2) et intermédiaire (17) de la terre.

17. Dispositif suivant les revendications 15 et 16, caractérisé en ce que les tuyères (10a, b) placées dans le domaine d'intervalle se situant le plus près du sommet du soc sont raccordées à un récipient de réserve (7) avec des espèces de micro-organismes aérobies, que les tuyères (11) raccordées dans le domaine d'intervalle correspondant à la partie inférieure du soc, soient raccordées à des récipients de réserve (6) avec des espèces de micro-organismes anaérobies et que les tuyères placées dans le domaine d'intervalle moyen du soc (15) sont raccordées à un récipient de réserve avec des espèces de micro-organismes facultativement aérobies.

18. Dispositif suivant les revendications 15 et 17, caractérisé en ce que le récipient de réserve pour les micro-organismes anaérobies (6) se compose d'une matière élastique.

19. Dispositif suivant la revendication 18, caractérisé en ce que la matière anaérobie soit dosée depuis le récipient de réserve au moyen d'une pompe à piston (13) et peut être accélérée au moyen d'une pompe à vis (13).

20. Dispositif suivant la revendication 18, caractérisé en ce que la matière anaérobie entière soit maintenue dans un système fermé à l'air.

21. Dispositif suivant les revendications 15 à 20, caractérisé en ce que, pour une utilisation jusqu'à une profondeur de pénétration maximale admissible, des éléments sensibles physiquement actifs, pouvant être intégrés à une unité de régulation, sont placés sur le soc et/ou sur l'appareil d'amendement.
